# EUROPEAN PATENT SPECIFICATION

(11) **EP 2 324 917 B1**
(45) Date of publication and mention of the grant of the patent: **22.03.2017**
(21) Application number: 10380140.3
(22) Date of filing: 18.11.2010
(51) Int. Cl.: B01J 35/00, C03C 8/12, C03C 8/16, C03C 8/20, B01J 37/02, C04B 41/86, B01J 21/06, C04B 41/00, C04B 41/50, C09D 7/12, C04B 111/00

(54) **PHOTOCATALYTIC CERAMIC GLAZE COMPOSITION**
PHOTOKATALYTISCHE KERAMISCHE GLASURZUSAMMENSETZUNG
COMPOSITION DE GLAÇURE PHOTOCATALYTIQUE CÉRAMIQUE

(30) Priority: 20.11.2009 ES 200931033 P
(43) Date of publication of application: 25.05.2011
(73) Proprietor: Ceracasa S.A., 12110 L'Alcora Castellón (ES)
(72) Inventor: Cabrera Ahís, Carlos, 12110 L'Alcora (Castellón) (ES); Sierra Grau, Felipe, 12110 L'Alcora (Castellón) (ES); Raya Mayorga, Fran, 12110 L'Alcora (Castellón) (ES); Artigas Puerto, Ramón, 08174 San Cugat del Valles (Barcelona) (ES)
(74) Representative: Ungria López, Javier

(56) References cited:
- EP-A2- 1 903 018
- EP-A2- 2 390 002
- US-A- 3 409 458
- US-A- 3 544 508
- US-A- 4 843 963
- US-A- 5 861 205
- US-A1- 2004 072 684
- US-A1- 2009 156 394
- DATABASE WPI Week 200844 Thomson Scientific, London, GB; AN 2008-G96981 XP002625010, & RU 2 326 073 C1 (SHCHEPOCHKINA YU A) 10 June 2008 (2008-06-10)
- D. M. TOBALDI ET AL.: "Photocatalytic activity for exposed building materials", JOURNAL OF THE EUROPEAN CERAMIC SOCIETY, vol. 28, 2008, pages 2645-2652, XP023610739, DOI: 10.1016/j.jeurceramsoc.2008.03.032
- A. FUJISHIMA ET AL.: "Titanium dioxide photocatalysis", JOURNAL OF PHOTOCHEMISTRY AND PHOTOBIOLOGY C: PHOTOCHEMISTRY REVIEWS, vol. 1, 2000, pages 1-21, XP008133652, DOI: 10.1016/S1389-5567(00)00002-2
- DATABASE WPI Week 201050 Thomson Scientific, London, GB; AN 2010-J74511 XP002625011, -& WO 2010/084226 A2 (FMC FORET SA) 29 July 2010 (2010-07-29) & ES 2 343 234 A1 (FMC FORET S A [ES]) 26 July 2010 (2010-07-26)
- Anonymous: "Framework silicates (Tecto-)", Lecture Script, 30 November 2006 (2006-11-30), XP007920750, Department of Geology, University of Illinois at Urbana-Champaign Retrieved from the Internet: URL:http://classes.geology.uiuc.edu/06Fall Class/geo432/Lecture15-2.pdf [retrieved on 2012-06-25]
- YASEEN IQBAL, WILLIAM EDWARD LEE: "Microstructural Evolution in Triaxial Porcelain", JOURNAL OF THE AMERICAN CERAMIC SOCIETY, vol. 83, no. 12, 2000, pages 3121-3127, XP008153050, DOI: 10.1111/j.1151-2916.2000.tb01692.x

## Description

### Technical field

The present invention relates to the field of ceramic glazes and more specifically to the field of ceramic glazes with photocatalytic capacity specially applied in the manufacture of ceramic coatings. Particularly, said coatings will be characterized by comprising semiconductor materials, especially TiO₂, which, under proper wavelength radiation, will be capable of causing the oxidation of nitrogen oxides contacting therewith.

### Background of the invention

One of the major pollution problems currently existing in large cities is derived from the emissions of nitrogen oxides to the atmosphere. Nitrogen oxides (hereinafter referred as NOxs) are a mixture of gases composed by nitrogen and oxygen among which nitrogen monoxide and nitrogen dioxide should be mentioned, due to their greater toxicological impact.

Annually, more than 30 million tons of NOx are emitted into the atmosphere by human action. NOxs are mainly produced in combustion processes, both in movable (cars, trucks, public transportation) and fixed (incinerator ovens or power plants) sources. Also, some specific chemical industries (production of nitric acid, uric acid, etc.) contribute in a lesser extent.

The emission of nitrogen oxides (NOxs) into the atmosphere causes a variety of problems in population health as well as negative environmental impacts on the planet. In this regard, direct exposure to said oxides in concentrations higher than 3 ppm increases the possibilities of lung diseases, especially in children and elderly, and it is critical for cardiac patients.

Similarly, NOxs react with unburned hydrocarbons to form ozone, the primary cause of photochemical smog, which causes among other health problems, eye irritation, coughing, headaches or respiratory problems.

In addition to the negative effects on humans and wildlife, nitrogen oxides cause damage in forestry and seriously affect the growth of certain varieties of crops and fruit crops. These, along with sulfur oxides, are the mainly responsible for acid rain. On the other hand, NOxs, mainly in their forms NO₂ and NO, are gases that contribute to the climate change and global warming of the planet, being its influence more harmful than that of CO₂. In particular, it has been calculated that NOx is about 310 times more harmful than CO₂.

Although many technologies have been developed with the object of reducing or eliminating the emissions of said pollutant gases, yet there remains the need to design new processes, more economical and effective, in order to achieve the decontamination levels established by the laws without compromising the current level of economic development and social welfare derived from the use of fossil fuels such as oil and natural gas.

In this regard, the solution suggested by present invention is based on presenting a new ceramic glaze composition with photocatalytic capacity, intended for manufacturing ceramic materials capable of continuously maintaining their photocatalytic activity over time.

Already for some years, it is known the processing capacity of organic compounds having certain elements with photocatalytic properties. Similarly, it is well known the photocatalytic nature of compounds such as titanium dioxide, which has been widely used because it is an economic, safe and chemically stable compound. In this regard, the first known studies about the possible use of TiO₂ for the oxidation of organic molecules were developed by Teichner et *al*. (P.C. Gravelle, F. Juillet, P. Meriaudeau and S.J. Teichner, Discuss. Faraday Soc, 52, 140 (1971); M. Formenti, F. Juillet, P. Meriaudeau and S.J. Teichner, Chem Technol., 1.680 (1971)).

However, most part of investigations carried out so far have been focused on the study of the photodegradation mechanism, as well as the properties of the process catalysts themselves.

Despite of that, studies have been also developed, mainly in Japan, directed to the possibility of treating low concentrations of NOx by using photocatalysis. Thus, for example, Ichiura et *al*. works are focused on the study of photocatalytic oxidation of NOx on metal compounds modified titanium dioxide sheets (Ichiura, H., Kitaoka, T., Tanaka, H., "Photocatalytic oxidation of NOx using composite sheets containing TiO2 and a metal compound", Chemosphere 51, 855 (2003)). Similarly, Dalton et *al*. have studied the photocatalytic degradation of NOx of the atmosphere, using TiO₂ as photocatalyst (Dalton, J.S., Janes, P.A., Nicholson J.A., Hallam K.R., Allen, G.C., "Photocatalytic oxidation of NOx gases using TiO2: a surface spectroscopic approach", Environ. Pollut. 120, 415 (2002)). Also in the literature it is possible to find works on the application of TiO₂ for avoiding pollution effects on buildings under solar irradiation (A. Fujishima, Taiyo Enerugi, 26 (2), 2-6 (2000)).

In addition, Tobaldi, D.M. et al., "Photocatalytic activity for exposed building materials", Journal of the European Ceramic Society, vol. 28, 2008, pages 2645-2652, studied the photocatalytic activity of silicatic based ceramic samples. In particular, on page 2647 (left column, paragraph 1), the authors describe that the samples were prepared by mixing the clay with 2.5 wt% and 7.5 wt% of titania in form of slip with 60 wt% of distilled water.

In patent literature it should be mentioned, among others, the international applications WO97/10185, WO97/10186, WO99/44954 or WO2006/030250 A2, as well as patents such as the ES2265150, wherein the photocatalytic capacity of TiO₂ is described, as well as its application, for example in the manufacture of coatings or in the self-cleaning of surfaces.

Besides, US Patent No. US5861205 describes a NOₓ-cleaning paving block comprising a surface layer which contains TiO₂ and which is layered on a concrete-made base layer (abstract). In particular, it comprises a surface layer comprising 100 parts by weight of cement, 5-50 parts by weight of TiO₂ powder and 100-700 parts by weight of sand (claim 1). In addition, the surface layer may contain an adsorbing material, being present for example at a weight ratio of 5-30 to 100 parts by weight of the total composition of the surface layer except water.

US Patent Application No. US2009156394 describes photocatalytic NOₓ-cleaning glazes comprising TiO₂, feldspar and fluxing agents. It also discloses a method for preparing a ceramic glaze with photocatalytic NOₓ-cleaning function.

US Patent Application US2004072684 discloses a formulation comprising titanium dioxide as a photocatalyst and an amphoteric metal oxide or a basic metal oxide as a material having a base point. This formulation is suitable for oxidizing the carbon monoxide to nitrogen dioxide by hydroxyl radicals as active oxygen species produced by TiO₂.

Finally, European Patent Application No. EP2390002 refers to a photocatalytic mixture for the degradation of nitrogen oxides characterised in that it comprises a photocatalytically active combination of TiO₂ and a feldspathoid material. The effective filing date of this application is 23.01.2009. However, its publication date is later than the effective filing date of the present application (20.11.2009). Thus, EP2390002 is cited as a prior art document under the terms of Article 54(3) EPC.

The main differences between the invention as claimed and the one described in EP2390002 are the following ones:
- In EP2390002, the synthetic material is a feldspathoid material (i.e., it does not describe the possibility of using feldspar as part of the photocatalytic mixture);
- In EP2390002 the compound with photocatalytic properties is limited to be TiO₂;
- In EP2390002 the amount of TiO₂ in the mixture is 10 and 90 wt% of the feldspathoid material (and not of the total product);
- Finally, in EP2390002 the concentration of feldspathoids is not limited to 10-90 wt% of the total product, but is only referred to the relative proportion with respect to the weight of TiO₂.

In this regard, it will be the object of this invention to present a new ceramic glaze composition capable of achieving highly effective results in terms of reducing the level of nitrogen oxides, while allowing said efficiency to be maintained over a long period of time. Thus, it is possible to provide structural elements, such as the tiles used in building coating, with a functional nature additional to the simple and merely decorative function that said ceramic elements usually have.

### Description of the invention

The present invention relates to a new ceramic glaze composition characterized in that it comprises:
a) from 50 to 90%, preferably from 60 to 85% by weight solid of a product comprising from 10 to 90%, preferably from 40 to 60%, of a compound with photocatalytic properties, and from 10 to 90%, preferably from 40 to 60% of at least one natural and/or synthetic material of feldspathoid structure. This product may be based on the product and obtaining method as claimed in Spanish Patent Application ES2343234 (corresponding to European Patent Application EP2390002);
b) from 5 to 50%, preferably from 15 to 40% by weight solid of the composition of at least one fluxing additive;
c) from 0.5 to 20%, preferably from 1 to 10% by weight solid of the sodium tripolyphosphate composition. The compound with photocatalytic properties comprises titanium dioxide in its Anatase crystalline structure. Additionally, said compound with photocatalytic properties may comprise SrTiO₃, KTaO₃, ZrO₂, ZnS, CdSe, GaP and SiC, as well as any combination thereof.

In turn, natural and/or synthetic materials in the composition are characterized by being inert, nontoxic, and by having no photocatalytic activity. As it is known, feldspathoids are porous tectosilicates containing aluminum and silicon in similar proportions, which form a negatively charged three-dimensional structure balanced by cations.

Its main function will be to prevent photocatalytic deactivation of the titanium dioxide, thus enhancing its effectiveness and durability. In this sense, these natural and/or synthetic materials, intimately mixed with TiO₂, generate a synergistic effect through which the photocatalytic activity and durability are enhanced, so that the ceramic glaze is initially able to produce a more significantly abatement of the NOx in the surrounding atmosphere than if TiO₂ were pure. Subsequently, once the steady state is reached, they allow the ceramic glaze to maintain a constant and longlasting activity, while pure TiO₂ would be inactivated by poisoning. In the present invention, due to the presence of these materials, the anions derivatives from photooxidation of NOxs are reversibly deposited on the surface of feldspathoids thus maintaining the TiO₂ its photocatalytic activity unchanged. In a preferred embodiment of the invention, a mixture of various feldspathoids will be used, obtained from direct combination of its components, or either by heat treatments from precursors.

Finally, the fluxing additive will preferably consist of frits whose chemical composition will determine the sought fluxing. Preferably, these frits will include, as main components, fritted lead oxide (PbO) (inert, water insoluble) at a rate between 30 and 80% by weight of frits, preferably between 50 and 70%, and silicon dioxide (SiO₂) at a rate between 15 and 70% by weight of frits, preferably between 20 and 35%. As minor components, the frits will include zinc oxide (ZnO) between 1 and 10% by weight of frits, sodium oxide (Na₂O) between 1 and 8% by weight of frits, Titanium oxide (TiOP₂) between 0.5 and 6% by weight of frits, and dialuminum trioxide (Al₂O₃) between 0.2 and 6% by weight of frits.

Alternatively, other types of compounds that can be used as fluxing additives are MgO or Li₂O, as well as any combination thereof.

The ceramic composition described containing particles of titanium dioxide (TiO₂) in combination with feldspathoids at the rates as claimed in claim 1, once subjected to baking and exposed to sunlight is capable of maintaining the enhanced photocatalytic properties of TiO₂ by being capable of oxidizing nitrogen oxides (NOxs) coming into contact therewith without losing their effectiveness over time. This aspect is one of the main advantages of the present invention, being also one of the features that make it novel against the current state of the art.

Said oxidation process is based on the generation of hydroxyl radicals capable of degrading the pollutant compounds giving rise to substances harmless to the environment. The hydroxyl radical is a powerful oxidizing agent that oxidizes nitrogen dioxide (NO₂), by transforming it into nitrate ion. In turn, superoxide ion is capable of transforming nitrogen monoxide (NO) into nitrate ions.

In a preferred embodiment of the invention, the composition previously described will also comprise between 30 and 60%, preferably between 35 and 50% by weight of the total mixture, of at least one silk-screen carrier characterized by comprising between 60 and 90% by weight of at least one alcohol, preferably polyglycol; between 5 and 30% by weight of water and between 5 and 35% by weight of a polysaccharide-type resin.

For preparing the ceramic glaze made from the composition described above is not necessary to carry out any special modifications to the common processes and methods for manufacturing ceramic products. Thus, said method for preparing the ceramic glaze comprises the following steps:
a) Mixing the constituent elements of the ceramic glaze composition;
b) conditioning the previous mixture using a process that may consist of micronizing in a micro-beads mill or homogenization by stirring, and subsequent sieving until obtaining a mixture or solid composition with a wet rejection of 0% measured in a 45 micrometer sieve;
c) mixing the solid composition of the previous step with the silk-screen carrier in a percentage between 30 and 60%, preferably between 35 and 50% by weight.

A further object of this invention is directed to the ceramic glaze made from the previous method, characterized in that it comprises density values (at 25°C) between 1.55 and 1.85 kg/l.

Similarly, it will be object of this invention a ceramic piece characterized in that at least one of its faces comprises the previously described ceramic glaze. Said ceramic piece will preferably be of porcelain type with a water absorption of less than 0.5%.

In a preferred embodiment of the invention, the method for obtaining said ceramic piece will comprise the baking and its prior decoration, followed by the application of the photocatalytic glaze on the porcelain glaze of said piece by using one of the conventional silk-screen printing systems for producing ceramics. Among said systems, silk-screen printing, gravure systems and airspray systems are preferably.

In a preferred embodiment wherein the application system is carried out by gravure, the glaze will be deposited into the cavities of a matrix located on part of a smooth cylindrical and elastically deformable surface. The excess glaze deposited on the matrix will be removed by using a blade, which will in turn allow continuously mixing again the glaze, thus producing at least a partial restocking within the matrix cavities. Finally, the transfer of the glaze contained into the matrix cavities to the ceramic piece will be performed by direct contact, i.e. by continuously rolling and without dragging said matrix on the ceramic piece surface.

Once the glaze is deposited, the decorated ceramic piece will be subjected to a baking cycle from 45 to 70 minutes in an industrial oven, according to a baking curve with a curve arrest or maximum stable temperature area from 750°C to 1150°C.

Finally, the object of this invention will be the use of said ceramic pieces in order to reduce the NOx percentage existing in the air. Thus, in case that said ceramic piece is a tile on which a layer of the glaze object of the invention has been deposited, it will be possible to degrade 3.63 mg of NOx per m² per hour, equivalent to a reduction of 18.8% of the NOx concentration in the atmosphere. Similarly, in a particular application to be applied, for example, to 200 buildings of 8 floors with an area of 4800 m² each one covered with these tiles, it will be possible to remove about 238.491.000 mg by weight of NOx/year, assuming 12 hours daily of identical sunshine 365 days a year.

Moreover, an additional advantage showed by these ceramic pieces is their regeneration by simple washing, natural or voluntary, with water. Thus, in the wash, the ions derivatives from photocatalytic oxidation are dissolved in water, being able to be completely removed and, therefore, allowing the initial photocatalytic activity of the glaze to be recovered.

### Preferred embodiment of the invention

Three preferred embodiments of the present invention are now presented by way of example and in a not limitative manner.

### Example 1. Composition 278BCB1

In this first example there was used a ceramic glaze with the following composition: a solid preparation comprising 84% by weight solid of a product based on the product and preparation method as claimed in Spanish patent application published as ES2343234 A1 and in particular comprising from 10 to 90% by weight of titanium dioxide in the form of anatase with photocatalytic properties and from 10 to 90% by weight of at least one natural or synthetic material with feldspathoid structure, 1% by weight solid of sodium tripolyphosphate and 15% by weight solid of a fluxing additive, with the composition of said additive being as follows: 55% of lead oxide PbO, 22% of silicon dioxide SiO₂, 7% of Zinc oxide ZnO, 7% of sodium oxide Na₂O, 5% of titanium oxide TiO₂ and 4% of dialuminum trioxide Al₂O₃. Said solid composition was mixed and homogenized with the silk-screen carrier in a rate of 50% by weight of the total mixture, said silk-screen carrier being in turn composed of 85% of a polyglycol, 10% of water and 5% of polysaccharide-type resin. The resulting mixture showed a rejection of 0% in a 45 micrometer sieve and the resulting glaze was conditioned at a density of 1.68 kg/l. The referred photocatalytic glaze was applied on a porcelain-type ceramic piece (with water absorption of less than 0.5%), previously decorated and baked. The piece with the photocatalytic glaze was then subjected to a baking cycle for 50 minutes at a maximum baking temperature of 910°C. The photocatalytic piece thus obtained was tested according to ISO 22197-1:2007 in order to determine its activity degree, providing a value of 0.68 ppm/hour of NOx decomposition.

### Example 2. Composition 205SBB1

In this example there was used a ceramic glaze with the following composition: a solid preparation comprising 60% by weight solid of a product based on the product and preparation method as claimed in Spanish patent application published as ES2343234 A1 and in particular comprising from 10 to 90% by weight of titanium dioxide in the form of anatase with photocatalytic properties and from 10 to 90% by weight of at least one natural or synthetic material with feldspathoid structure, 5% by weight solid of sodium tripolyphosphate and 35% by weight solid of a fluxing additive, with the composition of said additive being as follows: 50% of lead oxide PbO, 35% of silicon dioxide SiO₂, 2% of Zinc oxide ZnO, 5% of sodium oxide Na₂O, 5% of titanium oxide TiO₂ and 3% of dialuminum trioxide Al₂O₃. Said solid composition was mixed and homogenized with the silk-screen carrier in a rate of 55% by weight of the total mixture, said silk-screen carrier being in turn composed of 80% of a polyglycol, 10% of water and 10% of polysaccharide-type resin. The resulting mixture showed a rejection of 0% in a 45 micrometer sieve, and the resulting glaze was conditioned at a density of 1.58 kg/l. The referred photocatalytic glaze was applied on a porcelain-type ceramic piece (with water absorption of less than 0.5%), previously decorated and baked. The piece with the photocatalytic glaze was then subjected to a baking cycle for 68 minutes at a maximum baking temperature of 875°C. The photocatalytic piece thus obtained was tested according to ISO 22197-1:2007 in order to determine its activity degree, providing a value of 0.59 ppm/hour of NOx decomposition.

### Example 3. Composition 265BCB1

In this example there was used a ceramic glaze with the following composition: a solid preparation comprising 75% by weight solid of a product based on the product and preparation method as claimed in Spanish patent application published as ES 2343234 A1 and in particular comprising from 10 to 90% by weight of titanium dioxide in the form of anatase with photocatalytic properties and from 10 to 90% by weight of at least one natural or synthetic material with feldspathoid structure, 1% by weight solid of sodium tripolyphosphate and 24% by weight solid of a fluxing additive, with the composition of said additive being as follows: 60% of lead oxide PbO, 25% of silicon dioxide SiO₂, 6% of Zinc oxide ZnO, 4% of sodium oxide Na₂O, 3% of titanium oxide TiO₂ and 2% of dialuminum trioxide Al₂O₃.

Said solid composition was mixed and homogenized with the silk-screen carrier in a rate of 45% by weight of the total mixture, said silk-screen carrier being in turn composed of 85% of a polyglycol, 6% of water and 9% of polysaccharide-type resin. The resulting mixture showed a rejection of 0% in a 45 micrometer sieve, and the resulting glaze was conditioned at a density of 1.62 kg/l. The referred photocatalytic glaze was applied on a porcelain-type ceramic piece (with water absorption of less than 0.5%), previously decorated and baked. The piece with the photocatalytic glaze was then subjected to a baking cycle for 60 minutes with a maximum baking temperature of 800°C. The photocatalytic piece thus obtained was tested according to ISO 22197-1:2007 to determine its activity degree, providing a value of 0.85 ppm/hour of NOx decomposition.

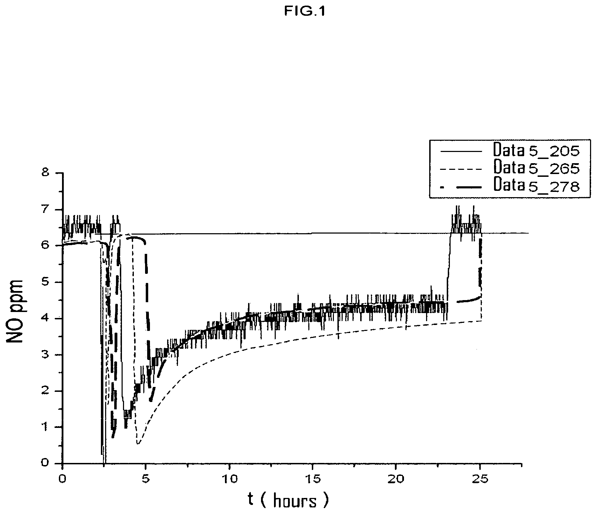

In the figure accompanying this description (FIG. 1) the comparative results of the three previous examples, according to the ISO 22197-1 2007 STANDARD, are represented.

## Claims

1. Ceramic glaze composition **characterized in that** it comprises, in percentage by weight in relation to the total weight of the composition:
a) from 50 to 90% by weight of a product comprising from 10 to 90% by weight of titanium dioxide in the form of anatase with photocatalytic properties, and from 10 to 90% by weight of at least one natural and/or synthetic material with feldspathoid structure;
b) from 5 to 50% by weight of at least one fluxing additive;
c) from 0.5 to 20% by weight of sodium tripolyphosphate.

2. Composition, according to claim 1, wherein the fluxing additive consists of ceramic frits **characterized by** comprising from 30 to 80% by weight of fritted lead oxide, from 15 to 70% by weight of silicon dioxide (SiO₂), from 1 to 10% by weight of zinc oxide (ZnO,) , from 1 to 8% by weight of sodium oxide (Na₂O), from 0.5 to 6% by weight of titanium oxide (TiO₂), and from 0.2 to 6% by weight of dialuminum trioxide (Al₂O₃).

3. Composition, according to claim 1 or 2, wherein the fluxing additive is selected from a group consisting of MgO and Li₂O, as well as any combination thereof.

4. Composition, according to any one of the preceding claims, **characterized in that** it additionally comprises between 30% and 60% by weight of the total mixture of at least one silk-screen carrier comprising from 60 to 90% by weight of an alcohol, from 5 to 30% by weight of water, and from 5 and to 35% by weight of a polysaccharide-type resin.

5. Method for preparing a ceramic glaze from a composition according to any one of claims 1 to 4, **characterized in that** it comprises the following steps:
a) mixing the constituent elements of the ceramic glaze composition;
b) conditioning the previous mixture by micronization in a micro-beads mill or by homogenization by stirring,
and subsequent sieving until obtaining a mixture or solid composition with a wet rejection of 0% measured in a 45 micrometer sieve;
c) mixing the solid composition of the previous step with a silk-screen carrier in a percentage by weight between 30 and 60%, wherein said silk-screen carrier comprises from 60 to 90% by weight of an alcohol, from 5 to 30% by weight of water, and from 5 and to 35% by weight of a polysaccharide-type resin.

6. Ceramic piece **characterized in that** at least one of its faces comprises a ceramic glaze obtained from a ceramic glaze composition according to claim 1.

7. Use of a ceramic piece according to claim 6 to continuously reduce photocatalytically the NO₂ and NO existing in the air.

## Patentansprüche

1. Keramische Glasurzusammensetzung, **dadurch gekennzeichnet, dass** sie, in Gewichtsprozent, bezogen auf das Gesamtgewicht der Zusammensetzung, umfasst:
a) 50 bis 90 Gew.-% eines Produkts, umfassend 10 bis 90 Gew.-% Titandioxid in Form von Anatas mit fotokatalytischen Eigenschaften, und 10 bis 90 Gew.-% von wenigstens einem natürlichen und/oder synthetischen Material mit Feldspatoidstruktur;
b) 5 bis 50 Gew.-% von wenigstens einem Flussmitteladditiv;
c) 0,5 bis 20 Gew.-% Natriumtripolyphosphat.

2. Zusammensetzung gemäß Anspruch 1, wobei das Flussmitteladditiv aus keramischen Fritten besteht, **dadurch gekennzeichnet, dass** sie 30 bis 80 Gew.-% gefrittetes Bleioxid, 15 bis 70 Gew.-% Siliciumdioxid (SiO₂), 1 bis 10 Gew.-% Zinkoxid (ZnO), 1 bis 8 Gew.-% Natriumoxid (Na₂O), 0,5 bis 6 Gew.-% Titanoxid (TiO₂) und 0,2 bis 6 Gew.-% Dialuminiumtrioxid (Al₂O₃) umfassen.

3. Zusammensetzung gemäß Anspruch 1 oder 2, wobei das Flussmitteladditiv ausgewählt ist aus einer Gruppe bestehend aus MgO und Li₂O sowie einer beliebigen Kombination davon.

4. Zusammensetzung gemäß einem der vorangehenden Ansprüche, **dadurch gekennzeichnet, dass** sie zusätzlich zwischen 30 und 60 Gew.-%, bezogen auf die gesamte Mischung, von wenigstens einem Siebdruckträger, umfassend 60 bis 90 Gew.-% eines Alkohols, 5 bis 30 Gew.-% Wasser und 5 bis 35 Gew.-% eines Harzes vom Polysaccharid-Typ, umfasst.

5. Verfahren zum Herstellen einer keramischen Glasur aus einer Zusammensetzung gemäß einem der Ansprüche 1 bis 4, **dadurch gekennzeichnet, dass** es die folgenden Schritte umfasst:
a) Mischen der konstituierenden Elemente der keramischen Glasurzusammensetzung;
b) Konditionieren der vorstehenden Mischung durch Mikronisieren in einer Mikroperlmühle oder durch Homogenisieren mittels Rühren, und anschließendes Sieben, bis eine Mischung oder feste Zusammensetzung mit einem Nassrückstand von 0 %, gemessen in einem 45 Mikrometer-Sieb, erhalten wird;
c) Mischen der festen Zusammensetzung des vorangehenden Schritts mit einem Siebdruckträger in einem Gewichtsprozentsatz zwischen 30 und 60 %, wobei der Siebdruckträger 60 bis 90 Gew.-% eines Alkohols, 5 bis 30 Gew.-% Wasser und 5 bis 35 Gew.-% eines Harzes vom Polysaccharid-Typ umfasst.

6. Keramikteil, **dadurch gekennzeichnet, dass** wenigstens eine seiner Oberflächen eine keramische Glasur umfasst, die aus einer keramischen Glasurzusammensetzung gemäß Anspruch 1 erhalten wird.

7. Verwendung eines Keramikteils gemäß Anspruch 6, um kontinuierlich das in der Luft vorhandene NO₂ und NO fotokatalytisch zu reduzieren.

## Revendications

1. Composition de glaçure céramique **caractérisée en ce qu'**elle comprend, en pourcentage en masse par rapport à la masse totale de la composition :
a) de 50 à 90 % en masse d'un produit comprenant de 10 à 90 % en masse de dioxyde de titane dans la forme d'anatase avec des propriétés photocatalytiques, et de 10 à 90 % en masse d'au moins un matériau naturel et/ou synthétique avec une structure de feldspathoïde ;
b) de 5 à 50 % en masse d'au moins un additif de fondant ;
c) de 0,5 à 20 % en masse de tripolyphosphate de sodium.

2. Composition, selon la revendication 1, dans laquelle l'additif de fondant consiste en des frittes céramiques **caractérisées en ce qu'**elles comprennent de 30 à 80 % en masse d'oxyde de plomb fritté, de 15 à 70 % en masse de dioxyde de silicium (SiO₂), de 1 à 10 % en masse d'oxyde de zinc (ZnO), de 1 à 8 % en masse d'oxyde de sodium (Na₂O), de 0,5 à 6 % en masse d'oxyde de titane (TiO₂), et de 0,2 à 6 % en masse de trioxyde de dialuminium (Al₂O₃).

3. Composition, selon la revendication 1 ou 2, dans laquelle l'additif de fondant est choisi dans un groupe constitué de MgO et LiO₂, ainsi que d'une combinaison quelconque de ceux-ci.

4. Composition, selon l'une quelconque des revendications précédentes, **caractérisée en ce qu'**elle comprend de plus entre 30 % et 60 % en masse du mélange total d'au moins un support d'écran de soie comprenant de 60 à 90 % en masse d'un alcool, de 5 à 30 % en masse d'eau, et de 5 à 30 % en masse d'une résine de type polysaccharide.

5. Procédé de préparation d'une glaçure céramique à partir d'une composition selon l'une quelconque des revendications 1 à 4, **caractérisé en ce qu'**il comprend les étapes suivantes de :
a) mélange des éléments constituants de la composition de glaçure céramique ;
b) conditionnement du mélange précédent par micronisation dans un broyeur à microbilles ou par homogénéisation par agitation, et tamisage subséquent jusqu'à obtenir un mélange ou une composition solide avec un rejet humide de 0 % mesuré dans un tamis de 45 micromètres ;
c) mélange de la composition solide de l'étape précédente avec un support d'écran de soie dans un pourcentage en masse entre 30 et 60 %, dans lequel ledit support d'écran de soie comprend de 60 à 90 % en masse d'un alcool, de 5 à 30 % en masse d'eau, et de 5 à 35 % en masse d'une résine de type polysaccharide.

6. Pièce céramique **caractérisée en ce qu'**au moins une de ses faces comprend une glaçure céramique obtenue à partir d'une composition de glaçure céramique selon la revendication 1.

7. Utilisation d'une pièce céramique selon la revendication 6 pour réduire en continu photocatalytiquement le NO₂ et NO existants dans l'air.
